# EUROPÄISCHE PATENTSCHRIFT

(11) **EP 0 741 662 B1**
(45) Veröffentlichungstag und Bekanntmachung des Hinweises auf die Patenterteilung: **10.02.1999**
(21) Anmeldenummer: 95936974.5
(22) Anmeldetag: 24.11.1995
(51) Int. Cl.: B65G 1/04

(54) **REGALBEDIENGERÄT**
RACK SERVING DEVICE
DISPOSITIF DE DESSERTE DE CASIERS

(30) Priorität: 24.11.1994 DE 4441894
(43) Veröffentlichungstag der Anmeldung: 13.11.1996
(73) Patentinhaber: SIEMENS AKTIENGESELLSCHAFT, 80333 München (DE)
(72) Erfinder: RASCHKE, Josef, D-85652 Pliening (DE); SCHUSTER, Rudolf, Dipl.-Ing., D-85551 Kirchheim (DE); STINGL, Rudolf, D-81476 München (DE)
(86) Internationale Anmeldenummer: DE9501657
(87) Internationale Veröffentlichungsnummer: WO9615963

(56) Entgegenhaltungen:
- EP-A- 0 444 626
- DE-A- 3 808 594
- FR-A- 2 630 412

## Beschreibung

Aus der Zeitschrift fördern und heben 19 (1969) Nr. 12, Seiten 727 bis 732 ist es bekannt, Regalbediengeräte bei Durchlauflagern als Einlagerungsgeräte für die vom Wareneingang oder direkt von der Produktion kommenden Waren oder als Auslagerungsgeräte für die Entnahme der Waren nach Aufträgen einzusetzen. Demgegenüber erfolgt bei Fachregallagern eine Aufteilung in einzelne Regalsysteme mit dazwischenliegenden Regalgängen, die jeweils von Regalbediengeräten befahren werden. Die vom Wareneingang oder der Produktion auf einem Ein- und Auslagerungsförderer ankommenden Waren, werden vor einem vorbestimmten Regalgang ausgeschleust, vom Regalbediengerät übernommen und in das gewünschte Regalfach abgelegt. Das Auslagern erfolgt in umkehrter Richtung mit den gleichen Förderelementen. Das Regalbediengerät holt die gewünschte Ware aus dem Regal fach und übergibt sie an den in dieser Richtung zum Versand führenden Ein- und Auslagerungsförderer.

Die bekannten Regalbediengeräte (z.B. FR-A-2 630 412) bestehen aus einem im Regalgang zwischen zwei Regal systemen oder parallel zur Längsrichtung vor einem Regalsystem auf Schienen verfahrbaren Wagen, der einen senkrechten Mast trägt. Ein auf dem Mast in vertikaler Richtung verfahrbares Hubteil trägt dann das für die Ein- und/oder Auslagerung der Waren erforderliche Greifsystem. Bei großen Höhen der Regalsysteme können zusätzlich zu den am Boden verlegten Schienen auch Führungsschienen im Deckenbereich vorgesehen sein. Durch den im Bodenbereich für Wagen und Hubteil und im Deckenbereich für das Hubteil erforderlichen Platz, können die entsprechenden Bereiche der Regalsysteme nicht für Regalfächer genutzt werden. Der durch die Konstruktion der Regalbediengeräte bedingte, nicht für Regalfächer nutzbare Raum im Boden- und Deckenbereich, führt somit insbesondere in Räumen geringerer Höhe zu einer erheblichen Reduzierung der Lagerkapazität.

Der im Anspruch 1 angegebenen Erfindung liegt das Problem zugrunde, ein Regalbediengerät zu schaffen, welches eine bessere Ausnutzung des für die Lagerung von Waren verfügbaren Raumes ermöglicht.

Die mit der Erfindung erzielten Vorteile bestehen insbesondere darin, daß die im Bereich der halben Höhe des Regalsystems sich in horizontaler Richtung erstreckende Führung für den Wagen nur einen relativ schmalen, für Regalfächer nicht nutzbaren Streifen des Regalsystems abdeckt. Ausgehend von diesem mittleren Streifen kann dann die auf dem Wagen angeordnete Hubeinrichtung das Greifsystem nach oben bis unter die Decke und nach unten bis zum Boden verfahren, d.h. sowohl der Deckenbereich als auch der Bodenbereich können für vom Regalbediengerät bedienbare Regalfächer genutzt werden.

Die im Anspruch 2 angegebene Lösung des der Erfindung zugrundeliegenden Problems basiert auf einer im Bereich der halben Breite des Regalsystems sich in vertikaler Richtung erstrekkenden Führung für den Wagen, die ebenfalls nur einen schmalen, für Regal fächer nicht nutzbaren Streifen des Regalsystems abdeckt. Ausgehend von diesem schmalen vertikalen Streifen kann dann die auf dem Wagen angeordnete Hubeinrichtung das Greifsystem nach links und nach rechts verfahren. Die im Anspruch 2 angegebene Variante eines Regalbediengerätes ist somit insbesondere für hohe Regalsysteme geeignet, die sich gegebenenfalls auch über zwei oder mehrere Etagen eines Gebäudes erstrecken können.

Vorteilhafte Ausgestaltungen der Erfindung sind in den Unteransprüchen angegeben.

Ausführungsbeispiele der Erfindung sind in der Zeichnung dargestellt und werden im folgenden näher beschrieben.

Es zeigen
- Figur 1: das Grundprinzip einer ersten Ausführungsform eines Regalbediengerätes,
- Figur 2: das Grundprinzip einer zweiten Ausführungsform eines Regalbediengerätes,
- Figur 3: eine Seitenansicht von Hubeinrichtung und Greifsystem eines Regalbediengerätes,
- Figur 4: eine Draufsicht auf ein komplettes Regalbediengerät mit Hubeinrichtung und Greifsystem gemäß Figur 4 und
- Figur 5: eine räumliche Darstellung einer Kommissionierzelle mit einem Regalbediengerät gemäß den Figuren 1, 3 und 4.

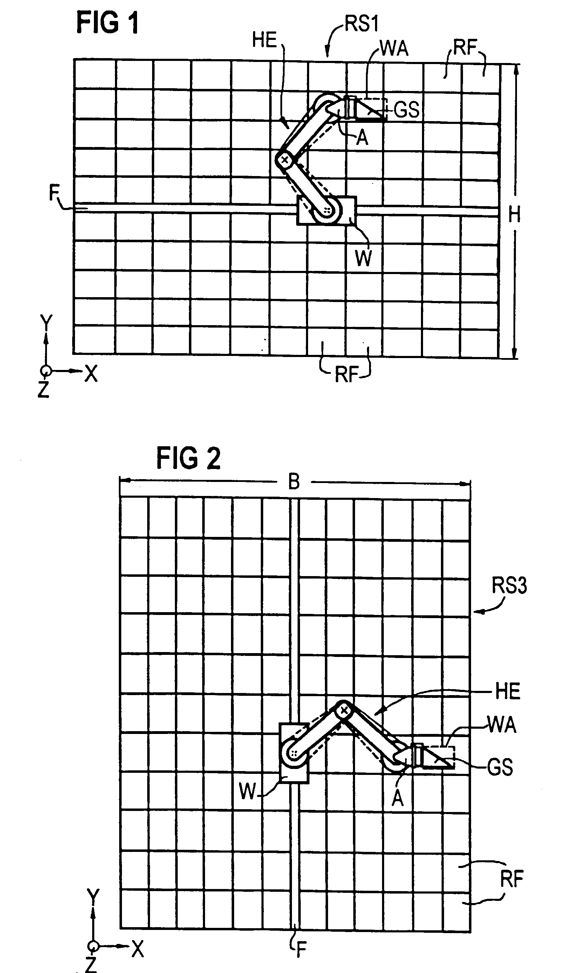

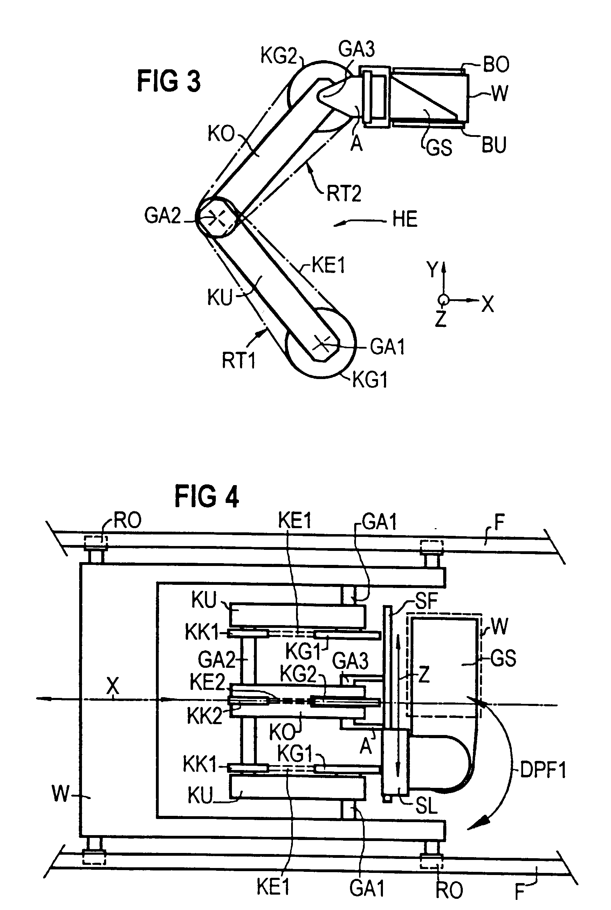

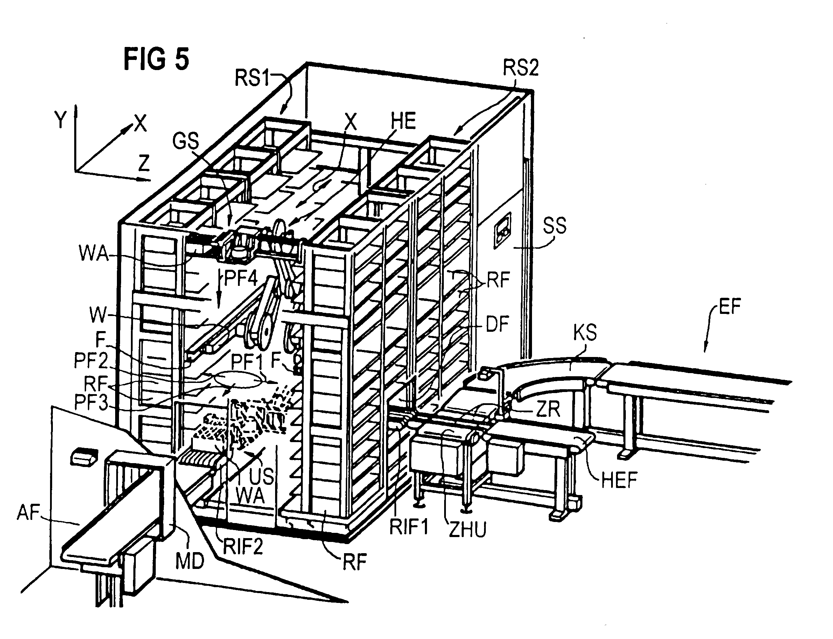

Figur 1 zeigt in stark vereinfachter schematischer Darstellung eine seitliche Ansicht eines ersten Regal systems RS1 mit einer Vielzahl von Regalfächern RF, die in der horizontalen X-Richtung nebeneinander und in der vertikalen Y-Richtung übereinander angeordnet sind. Die in Figur 1 durch ein Kreuz angedeutete Z-Richtung entspricht der senkrecht zur Zeichnungsebene verlaufenden Querrichtung, d.h. sie gibt die Richtung der Tiefe der Regalfächer RF an. Auf halber Höhe H des Regal systems RS1 erstreckt sich in der horizontalen X-Richtung eine Führung F für einen in Figur 1 nur schematisch dargestellten Wagen W. Auf diesem Wagen W ist eine im Zusammenhang mit den Figuren 3 und 4 noch näher zu erläuternde Hubeinrichtung HE angeordnet, deren in der vertikalen Y-Richtung verstellbares Abtriebsglied A ein in der Querrichtung Z verfahrbares Greifsystem GS trägt. Es ist ersichtlich, daß das Greifsystem GS durch Verfahren des Wagens W in X-Richtung und durch Verstellen der Hubeinrichtung HE in Y-Richtung jedes einzelne Regalfach RF anfahren kann. Die in Figur 1 durch eine gestrichelte Linie dargestellte Ware WA kann dann nach dem Anfahren eines vorbestimmten Regalfachs RF durch Verfahrens des Greifsystems GS in Z-Richtung ein- oder ausgelagert werden.

Figur 2 zeigt in stark vereinfachter schematischer Darstellung eine seitliche Ansicht eines dritten Regalsystems RS3 mit einer Vielzahl von Regalflächern RF, die in der horizontalen X-Richtung nebeneinander und in der vertikalen Y-Richtung übereinander angeordnet sind. Die in Figur 2 durch ein Kreuz angedeutete Z-Richtung entspricht der senkrecht zur Zeichnungsebene verlaufenden Querrichtung, d.h. sie gibt auch hier die Richtung der Tiefe der Regalfächer RF an. In der Mitte der gesamten Breite B des Regalsystems RS3 erstreckt sich in der vertikalen Y-Richtung eine Führung F für den in Figur 2 nur schematisch dargestellten Wagen W. Auf dem Wagen W ist wieder die im Zusammenhang mit Figur 1 bereits erwähnte Hubeinrichtung HE angeordnet, deren hier in der horizontalen X-Richtung verstellbares Abtriebsglied A das in der Querrichtung Z verfahrbare Greifsystem GS trägt. Es ist ersichtlich, daß auch hier das Greifsystem GS zum Ein- oder Auslagern von Waren WA durch Verfahren des Wagens W in Y-Richtung und durch Verstellen der Hubeinrichtung HE in X-Richtung jedes einzelne Regalfach RF anfahren kann.

Die Figuren 3 und 4 zeigen die Hubeinrichtung HE mit dem Greifsystem GS in der Seitenansicht bzw. das komplette Regalbediengerät mit Wagen W, Hubeinrichtung HE und Greifsystem GS in der Draufsicht. Das hier dargestellte Regalbediengerät wird im Regalgang zwischen zwei Regal systemen angeordnet und umfaßt somit zwei im Abstand zueinander auf halber Höhe der zugehörigen Regalsysteme angeordnete, U-förmige Führungen F. In diesen beiden Führungen F ist der in der Draufsicht U-förmige Wagen W mit Hilfe von vier Rollen RO in X-Richtung geführt. Auf der Innenseite der beiden Schenkel des Wagens W ist jeweils eine Kurbel KU auf einer ersten drehfesten Gelenkachse GA1 drehbar angeordnet. Die beiden anderen Enden der Kurbel KU sind über eine zweite Gelenkachse GA2 drehfest miteinander verbunden. Auf dieser zweiten Gelenkachse GA2 ist in der Mitte zwischen den beiden Kurbeln KU eine Koppel KO drehbar gelagert, die ihrerseits an ihrem anderen Ende eine drehbar gelagerte, dritte Gelenkachse GA3 trägt. Das gabelförmig ausgebildet Abtriebsglied A ist drehfest mit dieser dritten Gelenkachse GA3 verbunden und somit drehbar auf der Koppel KO gelagert.

Die beiden Kurbeln KU, die Koppel KO und das Abtriebsglied A bilden eine Gelenkkette, die konstruktiv so ausgelegt ist und deren Glieder so angetrieben werden, daß die dritte Gelenkachse GA3 bei einer Drehung der Kurbel KU eine rein vertikale Bewegung in Y-Richtung ausführt, und daß das Abtriebsglied A dabei seine horizontale räumliche Ausrichtung beibehält. Hierzu sind zunächst die Abstände zwischen den Gelenkachsen GA1 und GA2 der Kurbeln KU und der Abstand zwischen den Gelenkachsen GA2 und GA3 der Koppel KO gleichlang. Außerdem ist die Koppel KO über zwei erste Ketten- oder Riementriebe RT1 im Verhältnis 2:1 durch die Kurbeln KU angetrieben, während das Abtriebsglied A über einen zweiten Ketten- oder Riementrieb RT2 im Verhältnis 1:2 duch die Koppel KO angetrieben ist. Bei schwereren zu handhabenden Waren WA, wie den im dargestellten Ausführungsbeispiel zu handhabenden Papierstapeln, werden Kettentriebe mit Einfach- oder Doppelketten bevorzugt. So umfaßt jeder der beiden ersten Ketten- oder Riementriebe RT1 ein drehfest mit der ersten Gelenkachse GA1 verbundenes großes Kettenrad KG1, eine Kette KE1 und ein drehbar auf der zweiten Gelenkachse GA2 gelagertes und mit der Koppel KO drehfest verbundenes kleines Kettenrad KK1. Der zweite Ketten- oder Riementrieb RT2 umfaßt ein drehfest auf der zweiten Gelenkachse GA2 angeordnetes kleines Kettenrad KK2, eine Kette KE2 und ein drehbar auf der dritten Gelenkachse GA3 gelagertes und drehfest mit dem Abtriebsglied A verbundenes großes Kettenrad KG2. Das kleine Kettenrad KK2 und das große Kettenrad KG2 sind dabei innerhalb der geschlitzten Endbereiche der Koppel KO angeordnet.

Das Greifsystem GS ist auf einem Schlitten SL um insgesamt 180° schwenkbar gelagert, so wie es in Figur 4 durch einen Doppelpfeil DPF1 angedeutet ist. Bei einer ebenfalls möglichen Schwenkbewegung um 90° erstreckt sich das Greifsystem GS in X-Richtung, d.h. in Richtung des entsprechenden Regalganges. Der Schlitten SL ist seinerseits auf einer an dem gegabelten Abtriebsglied A angebrachten Schlittenführung SF in Querrichtung Z verfahrbar angeordnet. Die von dem Greifsystem GS zu handhabenden Waren WA, bei welchen es sich im dargestellten Ausführungsbeispiel um durch strichpunktierte Linien angedeutete Papierstapel handelt, werden zwischen einer unteren Backe BU und einer relativ zu dieser unteren Backe BU verstellbaren oberen Backe BO aufgenommen. Hierdurch wird ein aktives Greifen ermöglicht, bei welchem das Greifsystem GS die Papierstapel festklemmt und damit eine absolut sichere Handhabung gewährleistet. Die untere Backe BU ist als Gabel mit mehreren Zinken ausgebildet, so daß die Waren WA auf eine Fördereinrichtung mit entsprechend beabstandeten Riemen abgesenkt werden können oder auch von einer derartigen Fördereinrichtung abgehoben werden können. Die gabelförmige Ausbildung der unteren Backe BU hat ferner den Vorteil, daß bei der Beladung der Regalfächer RF (vergleiche Figur 1) mit Waren WA ebenfalls gegabelte Abstreif- und Halteelemente die Waren WA beim Zurückziehen des Greifsystems GS in den Regalfächern RF halten. Die Zinken der Abstreif- und Halteelemente werden dabei zwischen die Zinken der unteren Backe BU eingeschwenkt oder eingefahren. Die obere Backe BO kann zu diesem Zweck ebenfalls als Gabel mit mehreren Zinken ausgestaltet werden.

Die Antriebe des Wagens W, der Hubeinrichtung HB, des Schlittens SL und des Greifsystems GS sind in den Figuren 3 und 4 zur Vereinfachung der zeichnerischen Darstellung und zur Verbesserung der Übersicht nicht näher dargestellt. Der Wagen W kann beispielsweise über Zahnriemen oder Ketten oder auch über ein Ritzel und eine Zahnstange angetrieben werden. Der Antrieb der Hubeinrichtung HE kann über einen auf dem Wagen W angeordneten und die Kurbeln KU antreibenden Getriebemotor vorgenommen werden. Die Verstellung des Schlittens SL in Z-Richtung kann über einen Motor und eine Gewindespindel vorgenommen werden. Die Verstellung der oberen Backe BO relativ zur unteren Backe BU des Greifsystems GS wird beispielsweise pneumatisch vorgenommen.

Figur 5 zeigt den Einsatz des anhand der Figuren 1, 3 und 4 beschriebenen Regalbediengeräts in einer Kommissionierzelle zum Zwischenlagern und Kommissionieren von Papierstapeln. Diese räumlich dargestellte Kommissionierzelle umfaßt das bereits in Figur 1 schematisch aufgezeigte erste Regalsystem RS1, ein zweites, parallel im Abstand dazu ausgerichtetes Regalsystem RS2, das im Regalgang zwischen den beiden Regalsystemen RS1 und RS2 auf den beiden in halber Regalhöhe angeordneten Führungen F verfahrbare Regalbediengerät, einen im rückwärtigen Bereich des zweiten Regalsystems RS2 angeordneten Schaltschrank SS, einen Eingabeförderer EF und einen Ausgabeförderer AF.

Die gegebenenfalls von mehreren in Figur 5 nicht dargestellten Druckmaschinen in Form von Papierstapeln ausgegebenen Waren WA (vergleiche Figuren 3 und 4), werden auf dem Eingabeförderer EF gesammelt und über ein Kurvenstück KS einem Zahnriemen-Hub-Umsetzer ZHU zugeführt. Die auf dem Zahnriemen-Hub-Umsetzer ZHU in X-Richtung ankommenden Waren WA, werden durch Anheben der beiden mit ZR bezeichneten Zahnriemen in Z-Richtung einem ersten Riemenförderer RIF1 zugeführt, der in einer Durchführung DF des zweiten Regalsystems RS2 angeordnet ist. Bei dieser Durchführung DF handelt es sich um zwei normale Regalfächer RF des zweiten Regalsystems RS2, zwischen denen der entsprechende Regalboden entnommen wurde. Durch den Zahnriemen-Hub-Umsetzer ZHU wird auch eine Handeingabe der Waren WA ermöglicht. Hierzu ist ein Handeingabeförderer HEF vorgesehen, der die Waren WA in Z-Richtung an den Zahnriemen-Hub-Umsetzer ZHU übergibt, welcher die Waren WA dann seinerseits durch Anheben der Zahnriemen ZR an den ersten Riemenförderer RIF1 übergibt.

Die in der Durchführung DF des zweiten Regal systems RS2 auf dem ersten Riemenförderer RIF1 bereitgestellten Waren WA, können dort vom Greifsystem GS des Regalbediengeräts ergriffen werden. Hierzu wird das Greifsystem GS in Richtung des Pfeiles PF1 geschwenkt und durch Verfahren des Wagens W in X-Richtung und durch Verstellen der Hubeinrichtung HE in Y-Richtung in eine Position auf der Innenseite der Durchführung DF gebracht. Durch Verfahren des Greifsystems in Z-Richtung kann dann die jeweilige Ware WA zwischen den Backen BO und BU (vergleiche auch Figur 3), festgeklemmt werden. Die einzelnen Zinken der unteren Backe BU befinden sich dabei vor dem aktiven Greifen der Ware WA in den Lücken zwischen den Riemen des ersten Riemenförderers RIF1. Das Regalbediengerät kann nun in der vorliegenden Stellung des Greifsystems GS die ergriffene Ware WA in eines der Regalfächer RF des zweiten Regal systems RS2 einlagern. Durch Schwenken des Greifsystems GS um 180° in Richtung des Pfeiles PF2, kann das Regalbediengerät die ergriffene Ware WA aber auch in eines der Regalfächer RF des ersten Regalsystems RS1 einlagern.

Bei der Kommissionierung, d.h. bei der Zusammenstellung von Waren WA entsprechend einem Auftrag, fährt das Regalbediengerät das Greifsystems GS vor die entsprechenden Regalfächer RF des ersten Regal systems RS1 oder des zweiten Regal systems RS2, worauf die dort zwischengelagerten Waren WA aktiv ergriffen werden. In Figur 5 ist dieses Ergreifen und die Entfernung einer Ware WA aus einem oberen Regal fach RF des ersten Regalsystems RS1 aufgezeigt. Nach dem Herausfahren der Ware WA aus dem Regal fach RF, wird dann das Greifsystem GS um 90° in Richtung des Pfeiles PF3 geschwenkt und anschließend in Richtung des Pfeiles PF4 nach unten verfahren. In der in Figur 5 durch gestrichelte Linien angedeuteten unteren Stellung US des Greifsystems GS, kann dann die Ware WA an einen in X-Richtung ausgerichteten und im stirnseitigen Endbereich des Regalganges vor dem ersten Regalsystem RS1 angeordneten zweiten Riemenförderer RIF2 übergeben werden. Auch bei dieser Übergabe befinden sich die Zinken der unteren Backe BU zwischen den Riemen des Riemenförderers. Nach der Übergabe der Waren WA an den zweiten Riemenförderer RIF2, werden diese an den sich stirnseitig anschließenden und in X-Richtung verlaufenden Ausgabeförderer AF übergeben. Der Ausgabeförderer AF transportiert dann die Waren WA durch einen Mauerdurchbruch MD zu einem in Figur 5 nicht dargestellten Abholplatz. An diesem Abholplatz können dann die entsprechend einem Kundenwunsch zusammengestellten Waren WA abgeholt oder zum Versand an den entsprechenden Kunden weitergegeben werden.

## Patentansprüche

1. Regalbediengerät für mindestens ein Regalsystem (RS1,RS2) mit einer Vielzahl von Regalfächern (RF), die in horizontaler Richtung (X) nebeneinander und in vertikaler Richtung (Y) übereinander angeordnet sind, mit
- einer im Bereich der halben Höhe (H) des Regalsystems (RS1,RS2) sich in horizontaler Richtung (X) erstreckenden Führung (F),
- einem auf der Führung (F) verfahrbaren Wagen (W),
- einer auf dem Wagen (W) angeordneten Hubeinrichtung (HE), deren Abtriebsglied (A) in vertikaler Richtung (Y) verstellar ist, und mit
- einem auf dem Abtriebsglied (A) der Hubeinrichtung (HE) angeordneten und in Querrichtung (Z) verfahrbaren Greifsystem (GS).

2. Regalbediengerät für mindestens ein Regalsystem (RS3) mit einer Vielzahl von Regal fächern (RF), die in horizontaler Richtung (X) nebeneinander und in vertikaler Richtung (Y) übereinander angeordnet sind, mit
- einer im Bereich der halben Breite (B) des Regalsystems (RS3) sich in vertikaler Richtung (Y) erstreckenden Führung (F),
- einem auf der Führung (F) verfahrbaren Wagen (W),
- einer auf dem Wagen (W) verfahrbaren Hubeinrichtung (HE), deren Abtriebsglied (A) in horizontaler Richtung (X) verstellbar ist, und mit
- einem auf dem Abtriebsglied (A) der Hubeinrichtung (HE) angeordneten und in Querrichtung (Z) verfahrbaren Greifsystem (GS).

3. Regalbediengerät nach Anspruch 1 oder 2,
**dadurch gekennzeichnet,**
daß die Hubeinrichtung (HE) durch eine Gelenkkette gebildet ist.

4. Regalbediengerät nach Anspruch 3,
**dadurch gekennzeichnet,**
daß die Hubeinrichtung (HE) eine drehbar auf dem Wagen (W) gelagerte Kurbel (KU), eine drehbar auf der Kurbel (KU) gelagerte Koppel (KO) und das drehbar auf der Koppel (KO) gelagerte Abtriebsglied (A) umfaßt.

5. Regalbediengerät nach Anspruch 4,
**dadurch gekennzeichnet,**
daß die Koppel (KO) derart angetrieben ist, daß sich das Abtriebsglied in vertikaler Richtung (Y) bewegt.

6. Regalbediengerät nach Anspruch 5,
**dadurch gekennzeichnet,**
daß die Koppel (KO) im Verhältnis 2:1 durch die Kurbel (KU) angetrieben ist.

7. Regalbediengerät nach Anspruch 6,
**dadurch gekennzeichnet,**
daß die Koppel (KO) über einen ersten Ketten- oder Riementrieb (RT1) durch die Kurbel (KU) angetrieben ist.

8. Regalbediengerät nach einem der Ansprüche 3 bis 7,
**dadurch gekennzeichnet,**
daß das Abtriebsglied (A) derart angetrieben ist, daß es bei einer Drehung der Kurbel (KU) seine räumliche Ausrichtung beibehält.

9. Regalbediengerät nach Anspruch 8,
**dadurch gekennzeichnet,**
daß das Abtriebsglied (A) im Verhältnis 1:2 durch die Koppel (KO) angetrieben ist.

10. Regalbediengerät nach Anspruch 9,
**dadurch gekennzeichnet,**
daß das Abtriebsglied (A) über einen zweiten Ketten- oder Riementrieb (RT2) durch die Koppel (KO) angetrieben ist.

11. Regalbediengerät nach einem der Ansprüche 4 bis 10,
**dadurch gekennzeichnet,**
daß die Abstände zwischen den Gelenkachsen (GA1,GA2,GA3) von Kurbel (KU) und Koppel (KO) jeweils gleich lang sind.

12. Regalbediengerät nach einem der Ansprüche 1 bis 11,
**dadurch gekennzeichnet,**
daß an dem Abtriebsglied (A) ein in Querrichtung (Z) verfahrbarer Schlitten (SL) für das Greifsystem (GS) angebracht ist.

13. Regalbediengerät nach Anspruch 12,
**dadurch gekennzeichnet,**
das Greifsystem (GS) schwenkbar auf dem Schlitten (SL) angeordnet ist.

14. Regalbediengerät nach einem der Ansprüche 1 bis 13, für zwei parallel im Abstand zueinander angeordnete Regalsysteme (RS1,RS2),
**dadurch gekennzeichnet,**
daß der Wagen (W) zwischen den beiden Regalsystemen (RS1,RS2) auf deren parallel zueinander ausgerichteten Führungen (F) verfahrbar ist.

15. Regalbediengerät nach einem der Ansprüche 4 bis 13 und nach Anspruch 14,
**dadurch gekennzeichnet,**
daß die Koppel (KO) zwischen zwei snychron auf dem Wagen (W) drehbaren Kurbeln (KU) angeordnet ist.

## Claims

1. Storage and retrieval unit for at least one rack system (RS1,RS2) with a multiplicity of compartments (RF), which are arranged one beside the other in the horizontal direction (X) and one above the other in the vertical direction (Y), having
- a guide (F) which extends in the horizontal direction (X) at half the height (H) of the rack system (RS1,RS2),
- a carriage (W) which can be displaced on the guide (F),
- a lifting device (HE) which is arranged on the carriage (W) and whose driven member (A) can be adjusted in the vertical direction (Y), and having
- a gripping system (GS) which is arranged on the driven member (A) of the lifting device (HE) and can be displaced in the transverse direction (Z).

2. Storage and retrieval unit for at least one rack system (RS3) with a multiplicity of compartments (RF), which are arranged one beside the other in the horizontal direction (X) and one above the other in the vertical direction (Y), having
- a guide (F) which extends in the vertical direction (Y) at half the width (B) of the rack system (RS3),
- a carriage (W) which can be displaced on the guide (F),
- a lifting device (HE) which can be displaced on the carriage (W) and whose driven member (A) can be adjusted in the horizontal direction (X), and having
- a gripping system (GS) which is arranged on the driven member (A) of the lifting device (HE) and can be displaced in the transverse direction (Z).

3. Storage and retrieval unit according to Claim 1 or 2, characterized in that the lifting device (HE) is formed by a link chain.

4. Storage and retrieval unit according to Claim 3, characterized in that the lifting device (HE) comprises a crank (KU) mounted rotatably on the carriage (W), a connecting rod (KO) mounted rotatably on the crank (KU), and the driven member (A) which is mounted rotatably on the connecting rod (KO).

5. Storage and retrieval unit according to Claim 4, characterized in that the connecting rod (KO) is driven such that the driven member moves in the vertical direction (Y).

6. Storage and retrieval unit according to Claim 5, characterized in that the connecting rod (KO) is driven at a ratio of 2:1 by the crank (KU).

7. Storage and retrieval unit according to Claim 6, characterized in that the connecting rod (KO) is driven by the crank (KU) via a first chain or belt drive (RT1).

8. Storage and retrieval unit according to one of Claims 3 to 7, characterized in that the driven member (A) is driven such that it maintains its three-dimensional orientation during a rotation of the crank (KU).

9. Storage and retrieval unit according to Claim 8, characterized in that the driven member (A) is driven at a ratio of 1:2 by the connecting rod (KO).

10. Storage and retrieval unit according to Claim 9, characterized in that the driven member (A) is driven by the connecting rod (KO) via a second chain or belt drive (RT2).

11. Storage and retrieval unit according to one of Claims 4 to 10, characterized in that the distances between the articulation spindles (GA1,GA2,GA3) of crank (KU) and connecting rod (KO) are of equal length in each case.

12. Storage and retrieval unit according to one of Claims 1 to 11, characterized in that a trolley (SL) which can be displaced in the transverse direction (Z) and is intended for the gripping system (GS) is fitted on the driven member (A).

13. Storage and retrieval unit according to Claim 12, characterized in that the gripping system (GS) is arranged such that it can be pivoted on the trolley (SL).

14. Storage and retrieval unit according to one of Claims 1 to 13 for two rack systems (RS1,RS2) which are arranged in parallel at a distance from one another, characterized in that, between the two rack systems (RS1,RS2), the carriage (W) can be displaced on the mutually parallel guides (F) thereof.

15. Storage and retrieval unit according to one of Claims 4 to 13 and according to Claim 14, characterized in that the connecting rod (KO) is arranged between two cranks (KU) which can be rotated synchronously on the carriage (W).

## Revendications

1. Dispositif de desserte de rayonnages pour au moins un système (RS1, RS2) de rayonnages comportant une multiplicité de casiers (RF) qui sont disposés en étant juxtaposés en direction (X) horizontale et superposés en direction (Y) verticale, comprenant
- un guide (F) s'étendant en direction (X) horizontale au niveau de la demi-hauteur (H) du système (RS1, RS2) de rayonnages,
- un chariot (W) pouvant être déplacé sur le guide (F),
- un mécanisme (HE) de levage, disposé sur le chariot (W) et dont l'organe (A) de sortie peut être réglé en direction (Y) verticale, et comprenant
- un système (GS) de préhension, disposé sur l'organe (A) de sortie du mécanisme (HE) de levage et pouvant être déplacé en direction (Z) transversale.

2. Dispositif de desserte de rayonnages pour au moins un système (RS3) de rayonnages comportant une multiplicité de casiers (RF) qui sont disposés en étant juxtaposés en direction (X) horizontale et superposés en direction (Y) verticale, comprenant
- un guide (F) s'étendant en direction (Y) verticale au niveau de la demi-largeur (B) du système (RS3) de rayonnages,
- un chariot (W) pouvant être déplacé sur le guide (F),
- un mécanisme (HE) de levage, pouvant être déplacé sur le chariot (W) et dont l'organe (A) de sortie peut être réglé en direction (X) horizontale, et comprenant
- un système (GS) de préhension, disposé sur l'organe (A) de sortie du mécanisme (HE) de levage et pouvant être déplacé en direction (Z) transversale.

3. Dispositif de desserte de rayonnages suivant la revendication 1 ou 2, caractérisé en ce que le mécanisme (HE) de levage est constitué par une chaine à articulations.

4. Dispositif de desserte de rayonnages suivant la revendication 3, caractérisé en ce que le mécanisme (HE) de levage comprend une manivelle (KU) montée à rotation sur le chariot (W), une bielle (KO) montée à rotation sur la manivelle (KU), et l'organe (A) de sortie monté à rotation sur la bielle (KO).

5. Dispositif de desserte de rayonnages suivant la revendication 4, caractérisé en ce que la bielle (KO) est entraînée de telle sorte que l'organe de sortie se déplace en direction (Y) verticale.

6. Dispositif de desserte de rayonnages suivant la revendication 5, caractérisé en ce que la bielle (KO) est entraînée par la manivelle (KU) dans le rapport 2:1.

7. Dispositif de desserte de rayonnages suivant la revendication 6, caractérisé en ce que la bielle (KO) est entrainée par la manivelle (KU) par l'intermédiaire d'une première transmission (RT1) à chaîne ou à courroie.

8. Dispositif de desserte de rayonnages suivant l'une des revendications 3 à 7, caractérisé en ce que l'organe (A) de sortie est entraîné de telle sorte qu'il conserve son orientation dans l'espace lors d'une rotation de la manivelle (KU).

9. Dispositif de desserte de rayonnages suivant la revendication 8, caractérisé en ce que l'organe (A) de sortie est entraîné par la bielle (KO) dans le rapport 1:2.

10. Dispositif de desserte de rayonnages suivant la revendication 9, caractérisé en ce que l'organe (A) de sortie est entraîné par la bielle (KO) par l'intermédiaire d'une deuxième transmission (RT2) à chaîne ou à courroie.

11. Dispositif de desserte de rayonnages suivant l'une des revendications 4 à 10, caractérisé en ce que les distances respectives entre les axes d'articulation (GA1, GA2, GA3) de la manivelle (KU) et de la bielle (KO) sont identiques.

12. Dispositif de desserte de rayonnages suivant l'une des revendications 1 à 11, caractérisé en ce qu'un coulisseau (SL), pouvant être déplacé en direction (Z) transversale et destiné à recevoir le système (GS) de préhension, est installé sur l'organe (A) de sortie.

13. Dispositif de desserte de rayonnages suivant la revendication 12, caractérisé en ce que le système (GS) de préhension est monté à pivotement sur le coulisseau (SL).

14. Dispositif de desserte de rayonnages suivant l'une des revendications 1 à 13, pour deux systèmes (RS1, RS2) de rayonnages disposés parallèlement à distance l'une de l'autre,
caractérisé en ce que le chariot (W) peut être déplacé entre les deux systèmes (RS1, RS2) de rayonnages sur leurs guides (F) orientés parallèlement entre eux.

15. Dispositif de desserte de rayonnages suivant l'une des revendications 4 à 13 et suivant la revendication 14, caractérisé en ce que la bielle (KO) est disposée entre deux manivelles (KU) rotatives en synchronisme sur le chariot (W).
